# EUROPÄISCHE PATENTSCHRIFT

(11) **EP 3 692 425 B1**
(45) Veröffentlichungstag und Bekanntmachung des Hinweises auf die Patenterteilung: **24.07.2024**
(21) Anmeldenummer: 18769334.6
(22) Anmeldetag: 11.09.2018
(51) Int. Cl.: G06Q 10/10

(54) **VERFAHREN ZUM ÜBERWACHEN EINER ANLAGE DER AUTOMATISIERUNGSTECHNIK**
METHOD FOR MONITORING AN AUTOMATION SYSTEM
PROCÉDÉ DESTINÉ À SURVEILLER UNE INSTALLATION DE TECHNIQUE D'AUTOMATISATION

(30) Priorität: 06.10.2017 DE 102017123221
(43) Veröffentlichungstag der Anmeldung: 12.08.2020
(73) Patentinhaber: Endress+Hauser Process Solutions AG, 4153 Reinach (CH)
(72) Erfinder: MAYER, Michael, 4104 Oberwil (CH); BÜCHIN, Andreas, 79541 Lörrach (DE); CORNELSEN, Norbert, 79699 Wieslet (DE)
(74) Vertreter: Trenkle, Dennis
(86) Internationale Anmeldenummer: PCT/EP2018/074472
(87) Internationale Veröffentlichungsnummer: WO 2019/068434

(56) Entgegenhaltungen:
- WO-A1-2016/030517
- DE-A1- 102014 106 211
- US-A1- 2007 285 222
- US-A1- 2015 294 483
- US-A1- 2015 350 225
- WANT R ET AL: "ACTIVE BADGES AND PERSONAL INTERACTIVE COMPUTING OBJECTS", IEEE TRANSACTIONS ON CONSUMER ELECTRONICS, IEEE SERVICE CENTER, NEW YORK, NY, US, vol. 38, no. 1, 1 February 1992 (1992-02-01), pages 10 - 20, XP000297357, ISSN: 0098-3063, DOI: 10.1109/30.125076
- KYMALAINEN TIINA ET AL: "Evaluating Future Automation Work in Process Plants with an Experience-Driven Science Fiction Prototype", 2016 12TH INTERNATIONAL CONFERENCE ON INTELLIGENT ENVIRONMENTS (IE), IEEE, 14 September 2016 (2016-09-14), pages 54 - 61, XP032986699, DOI: 10.1109/IE.2016.17

## Beschreibung

Die Erfindung betrifft ein Verfahren zum Überwachen einer Anlage der Prozessautomatisierung, wobei in der Anlage eine Vielzahl von Messstellen vorgesehen ist.

Aus dem Stand der Technik sind bereits Feldgeräte bekannt geworden, die in industriellen Anlagen zum Einsatz kommen. In der Automatisierungstechnik ebenso wie in der Fertigungsautomatisierung werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Sensorsysteme. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktorsysteme verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus^{®}, Foundation^{®} Fieldbus, HART^{®}, etc.) mit übergeordneten Einheiten verbunden. Bei den übergeordneten Einheiten handelt es sich um Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt, die die Messwerte gegebenenfalls weiterverarbeiten und an den Leitstand der Anlage weiterleiten. Der Leitstand dient zur Prozessvisualisierung, Prozessüberwachung und Prozessteuerung über die übergeordneten Einheiten. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Im Zuge der Industrie 4.0, bzw. IIoT ("Industrial Internet of Things") werden die von den Feldgeräten erzeugten Daten auch häufig direkt aus dem Feld mithilfe sogenannter Datenumsetzungseinheiten, welche beispielsweise als "Edge Devices" oder "Cloud Gateways" bezeichnet werden, erhoben und automatisiert an eine zentrale cloudfähige Datenbank übermittelt, auf welcher sich eine Applikation befindet. Auf diese Applikation, welche unter anderem Funktionen zur Visualisierung und weiteren Bearbeitung der auf der Datenbank gespeicherten Daten bietet, kann von einem Benutzer mittels Internet zugegriffen werden.

Mittels dieser Methoden ist die Überwachung der elektronischen Komponenten der Anlage - also der Feldgeräte und Steuerungseinheiten- möglich. Bei diesen Methoden bleiben allerdings die Betrachtung, bzw. der Einfluss rein mechanischer Komponenten, beispielsweise Rohrverbindungen, außen vor. Die Veränderung solcher mechanischer Komponenten, beispielsweise bei Ansatzbildung oder Leckage, könnten nur indirekt detektiert werden, beispielsweise über veränderte Messcharakteristiken der Feldgeräte. Im Fehlerfall wird daher mitunter eine große Zeitspanne benötigt, um die genaue Fehlerursache zu ermitteln.

Die US 2015/294483 A1 und die DE 10 2014 106211 A1 offenbaren Verfahren zur Zugangkontrolle in reglementierten Bereichen, wobei unter anderem eine Kamera zur Überwachung von Personen vorgesehen ist.

Die Veröffentlichung Want R. et al.: "Active badge and Personal Interactive Computing Objects", IEEE Transactions on Consumer Electronics, IEEE Service Center, New York, NY, US, Bd. 38, Nr. 1, 1. Februar 1992, Seiten 10-20, offenbart ein Verfahren zur Ortung von Personen mittels Zugangskarten, wobei eine solche Zugangskarte einen IR-Sender aufweist.

Die WO 2016/030517 A1 offenbart ein Service- und Informationssystem für Gebäude sowie entsprechende Verfahren zur automatischen Bearbeitung von technischen Störungen oder von Service- und Wartungsarbeiten und deren Dokumentation. Mit Hilfe des Systems können Bewohner oder Nutzer eines Gebäudes automatisch über durchzuführende Reparatur- und Wartungsarbeiten informiert werden.

Ausgehend von dieser Problematik liegt der Erfindung die Aufgabe zugrunde, ein Verfahren vorzustellen, welche es erlaubt, die Ursache eines Fehlers in einer Anlage der Prozessautomatisierung schnell und zuverlässig zu ermitteln.

Die Aufgabe wird durch ein Verfahren gemäß Patentanspruch 1 gelöst.

Der große Vorteil des erfindungsgemäßen Verfahrens besteht darin, dass für die Findung der Fehlerursache an Messstellen in der Anlage auch Informationen eingeholt werden, welche von Feldgeräten und Steuereinheiten nicht messbar sind. Konkret werden Aufenthaltsorte und Aufenthaltszeiten von Personen in der Anlage erfasst und ausgewertet. So könnten beispielsweise Messwerte eines Durchflussmessgerätes, welche sich außerhalb eines definierten Normintervalls dadurch erklärt werden, dass beispielsweise eine Rohrleitung verstopft ist. Aus den Aufenthaltsdaten kann die Ursache ermittelt werden. Beispielsweise könnte ersichtlich sein, dass sich ein Wartungsmechaniker in regelmäßigen Zeitabständen bei der Messstelle befindet - beispielsweise um mit einem Gegenstand an das Rohr zu klopfen, was Ansatz im Rohrinneren entfernt. Durch die Aufenthaltsdaten wird deutlich, dass sich der Wartungsmechaniker in einem längeren Zeitraum vor dem Auftreten des Fehlers nicht mehr an der Messstelle aufgehalten hat, wodurch der Ansatz im Rohrinneren nicht mehr gelöst wurde.

Das Verfahren ist außerdem auch in älteren, rein analogen Anlagen einsetzbar, in denen überhaupt keine digitale Daten- und Diagnoseauswertung verfügbar ist.

Die Aufenthaltsdaten werden beispielsweise von einem in der Leitwarte integrierten übergeordneten System berechnet und ausgewertet.

Eine Messstelle besteht aus einer oder mehreren Anlagenkomponenten, beispielsweise einem Tank oder einer Rohrleitung, sowie aus zumindest einem Feldgerät. Feldgeräte im Sinne der vorliegenden Erfindung wurden bereits im einleitenden Teil der Beschreibung beispielhaft genannt.

Gemäß einer vorteilhaften Ausgestaltung des erfindungsgemäßen Verfahrens ist vorgesehen, dass die Aufenthaltsdaten in einer Datenbank gespeichert werden. Hierbei handelt es sich insbesondere um eine Datenbank, welche in einer Cloud-Umgebung implementiert ist. Alternativ befindet sich die Datenbank lokal in der Anlage, beispielsweise in der Leitwarte, oder in der Umgebung der Anlage.

Gemäß einer bevorzugten Ausgestaltung des erfindungsgemäßen Verfahrens ist vorgesehen, dass die Aufenthaltsdaten im Zuge des Auswertens in einem Diagramms, insbesondere einer Heatmap, visualisiert werden, in welchem die Anzahl der Zeitpunkte des Auftretens und/oder die Aufenthaltsdauer der Personen an einer jeweiligen Messstelle kumuliert dargestellt wird. Auf diese Art und Weise sind Häufungen für einen Bediener schnell ersichtlich. Beispielsweise können hierdurch wartungsintensive Messstellen schnell identifiziert werden.

Erfindungsgemäß werden die Personen anhand von Erkennungsmerkmalen eingruppiert.

Erfindungsgemäß werden die Personen anhand der Befugnis und/oder der Rolle eingruppiert, wobei die Befugnis und/oder die Rolle in einem Erkennungsmerkmal definiert ist, welches an der Person angebracht ist, insbesondere als Kleidungsstück in einer zur jeweiligen Befugnis und/oder Rolle zuordenbaren Farbe. Rollen einer Person sind beispielsweise deren auszuführende Funktion, beispielsweise Service-/Wartungstechniker, Prozessingenieur, Lieferant, Besucher, etc. Bestimmte Bereiche einer Anlage können für unbefugte Personen gesperrt sein. Explosionsgeschütze Bereiche dürfen beispielsweise nur von Fachkräften betreten werden, welche über das dementsprechende Knowhow und die erforderliche Schutzausrüstung verfügen.

Bei dem Kleidungsstück handelt es sich beispielsweise um einen Helm oder ein sonstiges leicht erkennbares Kleidungsstück.

Damit ist es des Weiteren auch möglich, eine Alarmfunktion in der Anlage zu implementieren. Im Falle dass Personen in für sie unbefugte Bereiche registriert werden, wird ein Alarm ausgelöst.

Erfindungsgemäß wird das Auswerten der Aufenthaltsdaten automatisch, insbesondere mittels einer mit der Datenbank verknüpften Applikation, vorgenommen, wobei das Ergebnis des Auswertens an einen Bediener ausgegeben wird. Der Bediener wählt im Voraus Kriterien aus, welche bei der Auswertung berücksichtigt werden.

Erfindungsgemäß werden die Aufenthaltsdaten, insbesondere automatisch, hinsichtlich zumindest einer der folgenden Auffälligkeiten ausgewertet werden:
- Gehäufte Aufenthaltsdauer von Personen und/oder an zumindest einer bestimmten Messstelle; und/oder
- Gehäufte Anzahl an Zeitpunkten von Personen an zumindest einer bestimmten Messstelle.

Eine vorteilhafte Weiterbildung des erfindungsgemäßen Verfahrens sieht vor, dass eine Vorhersage bezüglich einer zu erwartenden kumulierten Aufenthaltsdauer an zumindest einer Messstelle berechnet wird.

Alternativ können auch weitere Vorhersagen oder Trends berechnet werden.

Beispielsweise wird dafür eine Mustererkennung oder eine Wahrscheinlichkeitsrechnung angewandt. Über Machine Learning können auch bestimmte Muster erkannt werden und auf dieser Basis Zukunftsprognosen erstellt werden.

Gemäß einer bevorzugten Ausgestaltung des erfindungsgemäßen Verfahrens ist vorgesehen, dass die Aufenthaltsdaten vor dem Auswerten oder nach dem Auswerten hinsichtlich zumindest einem der folgenden Merkmale gefiltert werden:
- Filtern hinsichtlich zumindest eines Erkennungsmerkmals;
- Filtern hinsichtlich zumindest eines definierten Zeitraums; und/oder
- Filtern hinsichtlich zumindest einer Messstelle.

Es kann hierbei auch vorgesehen sein, diverse Zeiträume auszublenden. Als Beispiel sei hier ein "Tag der offenen Türe genannt", an welchem eine Begehung der Anlage von ansonsten unbefugten Personen stattfinden kann. Dieser Zeitraum hat keinen Einfluss auf die Auswertungen und wird daher nicht betrachtet.

Gemäß einer vorteilhaften Ausgestaltung des erfindungsgemäßen Verfahrens ist vorgesehen, dass die Aufenthaltsdaten vor dem Auswerten mit zumindest einem Datensatz der folgenden Daten verknüpft werden:
- Wetterdaten;
- Produktionsdaten; und/oder
- Finanzdaten.

Durch Verknüpfung der Aufenthaltsdaten mit dem weiteren Datensatz kann ein Mehrwert geschaffen werden:
- Mittels der Wetterdaten kann der Einfluss von Umgebungswerten berücksichtigt werden. Beispielsweise kann geprüft werden, ob bei hohen Temperaturen bestimmte Bereiche/Messstellen der Anlage wartungsintensiver sind als andere.
- Mittels der Produktionsdaten kann beispielsweise eine Häufung des Wartungsbedarfs einer Komponente der Anlage ermittelt werden, welches Produktionsdatum vor/nach einem bestimmten Datum liegt.
- Mittels der Finanzdaten können kostenintensive/kostengünstige Bereiche/Messstellen der Anlage identifiziert werden. Beispielsweise muss eine wartungsintensive Messstelle nicht unbedingt teuer sein - es interessiert eher die kostenintensivste Messstelle der Anlage, beispielsweise aufgrund hohen Materialverschleißes. Hieraus könnte abgeleitet werden, in welchem Bereich es Sinn ergibt, über kostensenkende Optimierungen nachzudenken.

Gemäß einer bevorzugten Ausgestaltung des erfindungsgemäßen Verfahrens ist vorgesehen, dass die Aufenthaltsdaten hinsichtlich zumindest einer der folgenden Auffälligkeiten ausgewertet werden:
- Zumindest einem Temperaturbereich, bzw. einer bestimmten Temperatur;
- Zumindest einem Herstellungsdatum, bzw. einem Herstellungszeitraum von Komponenten der Messstellen; und/oder
- Hinsichtlich der Wartungskosten der Messstellen.

Erfindungsgemäß werden die Bewegungen der folgenden Methode erfasst:
- Auswertung von Videobildern, welche mittels zumindest einer in der Anlage angeordneten Videokamera aufgezeichnet werden.

Auch weitere Arten der Bewegungserfassung sind möglich, beispielsweise über Kontaktpunkte im Boden, etc. Es ist auch möglich, verschiedene Erfassungsmethoden miteinander zu kombinieren. Es versteht sich von selbst, dass eine Auswertung nach Erkennungsmerkmalen, insbesondere nach den Farben von Kleidungsstücken der Personen, nur bei einer optischen Erfassungsmethode möglich ist.

Eine bevorzugte Weiterbildung des erfindungsgemäßen Verfahrens sieht vor, dass die Aufenthaltsdaten zusätzlich Trajektorien der einzelnen Personen umfassen. Dadurch können die Lauf-/Bewegungswege der Personen eingesehen werden.

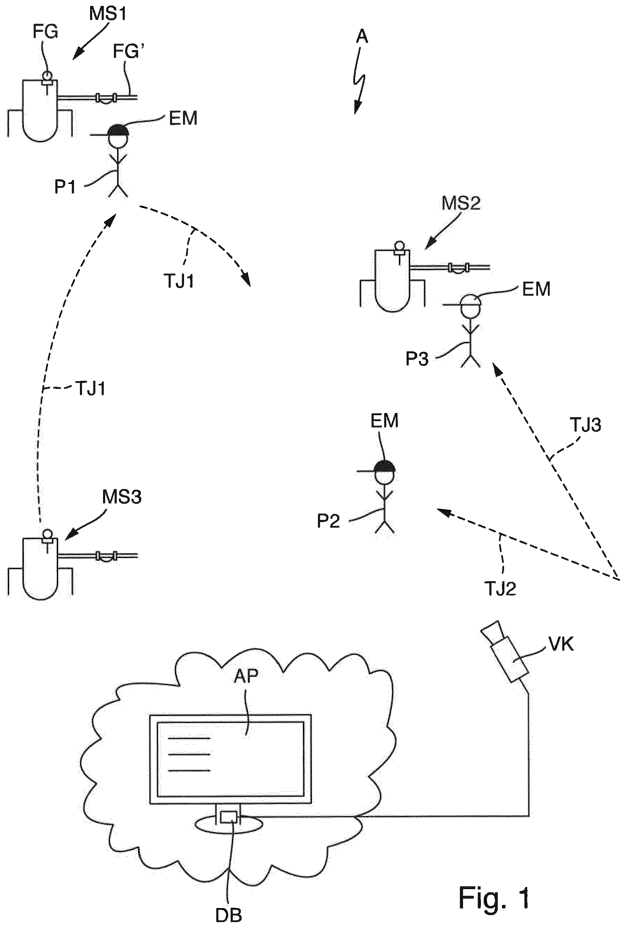

Die Erfindung wird anhand der nachfolgenden Figuren näher erläutert. Es zeigen
Fig. 1: ein Ausführungsbeispiel des erfindungsgemäßen Verfahrens; und

Fig.1 zeigt ein Ausführungsbeispiel des erfindungsgemäßen Verfahrens. In dieser Abbildung sind Teile einer Anlage A der Automatisierungstechnik abgebildet. Konkret handelt es sich um drei Messstellen MS1, MS2, MS3. Diese bestehen jeweils aus einem Tank und einer von dem Tank abführenden Rohrleitung. Zur Messung des Füllstands des Tanks ist jeweils ein Feldgerät FG, beispielsweise ein Füllstandsmessgerät mittels Radar, am Tank angebracht. Zur Messung der Durchflussgeschwindigkeit in der Rohrleitung ist jeweils ein Feldgerät FG' angebracht, beispielsweise ein Durchflussmessgerät nach dem Coriolisprinzip.

Die Messstellen MS1, MS2, MS3, sowie der zwischen den Messstellen MS1, MS2, MS3 gelegene Raum, werden durch zumindest eine Videokamera VK aufgezeichnet. Die aufgezeichneten Fotos/Videos werden an eine Datenbank DB übertragen. Diese ist insbesondere auf einer Cloud-Plattform vorhanden und durch einen Bediener mittels Internet kontaktierbar. Die Datenbank DB ist mit einer Applikation AP verbunden, welche die Aufzeichnungen auswertet.

Zweck der Aufzeichnung ist es, Aufenthaltsdaten von Personen P1, P2, P3 von Objekten zu erheben, welche sich in der Anlage A aufhalten und die Aufenthaltsdaten auf Auffälligkeiten auszuwerten. In dem in Fig. 1 gezeigten Beispiel befinden sich zwei Servicetechniker P1, P2, sowie ein Lieferant P3 aktuell in der Anlage A. Die Applikation AP gruppiert diese drei Personen P1, P2, P3 anhand von Erkennungsmerkmalen EM ein. Konkret handelt es sich hierbei um den Helm der Personen P1, P2, P3. Die Farbe des Helmes definiert die Rolle der Personen P1, P2, P3 in der Anlage A. Schwarz steht hierbei für die Rolle "Servicetechniker"; weiß steht hierbei für die Rolle "Lieferant".

Erfasst werden hierbei die Trajektorien T1, T2, T3 der Personen P1, P2, P3, sowie die Zeitpunkte des Aufhaltens und die Zeitdauer des Aufhaltens der Personen P1, P2, P3 an den Messstellen MS1, MS2, MS3. Der Servicetechniker P1 befindet sich auf einem Routinerundgang zu den einzelnen Messstellen MS1, MS2, MS3, wobei sich der Servicetechniker P2 auf dem Weg zu der Messstelle MS2 befindet, an welcher ein Problem aufgetreten ist, und wobei sich der Lieferant P3 auf dem Weg zu der Messstelle MS2 befindet, um den Tank zu füllen.

Diese auf diese Art und Weise ermittelten Aufenthaltsdaten werden ebenfalls in der Datenbank DB abgelegt. Mittels der Applikation AP werden die auf der Datenbank DB befindlichen Aufenthaltsdaten ausgewertet.

In einem ersten Schritt werden die Aufenthaltsdaten gefiltert. Die Filterung bezieht sich beispielsweise auf einen definierten Zeitraum und/oder auf eine definierte Rolle von Personen P1, P2, P3 und/oder auf eine oder mehrere Messstellen MS1, MS2, MS3.

Anschließend werden die gefilterten Aufenthaltsdaten auf Auffälligkeiten untersucht. Solche Auffälligkeiten sind beispielsweise ein gehäuftes Auftreten einer bestimmten Personengruppe an einer Messstelle MS1, MS2, MS3. Auch kann überprüft werden, ob bestimmte Personengruppen in regelmäßigen Abständen die Messstellen MS1, MS2, MS3 aufsuchen.

Auf diese Weise können Auffälligkeiten in der Anlage A ermittelt werden, welche mittels Diagnosewerten der Feldgeräte FG, FG' nicht ermittelbar sind, bzw. um Diagnosefälle aufzuklären. So könnten beispielsweise Messwerte eines Durchflussmessgerätes, welche sich außerhalb eines definierten Normintervalls dadurch erklärt werden, dass beispielsweise eine Rohrleitung verstopft ist. Aus den Aufenthaltsdaten kann die Ursache ermittelt werden. Beispielsweise könnte ersichtlich sein, dass sich der Servicetechniker P1 in regelmäßigen Zeitabständen, insbesondere im Rahmen der Wartungsroutine, bei der jeweiligen Messstelle MS1, MS2, MS3 befindet - beispielsweise um mit einem Gegenstand an das Rohr zu klopfen, was Ansatz im Rohrinneren entfernt. Durch die Aufenthaltsdaten wird deutlich, dass sich der Servicetechniker P1 in einem längeren Zeitraum vor dem Auftreten des Fehlers nicht mehr an der jeweiligen Messstelle MS1, MS2, MS3 aufgehalten hat, wodurch der Ansatz im Rohrinneren nicht mehr gelöst wurde.

Vorteilhafterweise können die Aufenthaltsdaten mit weiteren Datensätzen verknüpft werden, beispielsweise Wetterdaten, Prognosedaten, Finanzdaten und/oder mit Positionsdaten der Feldgeräte. Auf diese Art und Weise können zusätzliche Erkenntnisse gewonnen werden.

### Bezugszeichenliste

- A: Anlage
- AP: Applikation
- DB: Datenbank
- EM: Erkennungsmerkmale
- FG, FG': Feldgeräte
- MS1, MS2, MS3: Messstellen
- P1, P2, P3: Personen
- TJ1, TJ2, TJ3: Trajektorien
- VK: Videokamera

## Patentansprüche

1. Verfahren zum Überwachen einer Anlage (A) der Prozessautomatisierung, wobei in der Anlage (A) eine Vielzahl von Messstellen (MS1, MS2, MS3) vorgesehen ist, wobei eine Messstelle aus einer oder mehreren Komponenten besteht, umfassend:
- Erfassen von Bewegungen von in der Anlage (A) befindlichen Personen (P1, P2, P3) anhand einer Auswertung von Videobildern, welche mittels zumindest einer in der Anlage (A) angeordneten Videokamera (VK) aufgezeichnet werden;
- Berechnen von Aufenthaltsdaten, umfassend Zeitpunkte des Aufenthalts und/oder die jeweilige Dauer des Aufenthalts, der jeweiligen Personen (P1, P2, P3) an den einzelnen Messstellen (MS1, MS2, MS3) auf Basis der erfassten Bewegungen;
- Eingruppieren der Personen (P1, P2, P3) anhand von Erkennungsmerkmalen (EM), wobei die Personen (P1, P2, P3) anhand der Befugnis und/oder der Rolle eingruppiert werden, wobei die Befugnis und/oder die Rolle in einem Erkennungsmerkmal (EM) definiert ist, welches an der jeweiligen Person (P1, P2, P3) angebracht ist, wobei als Erkennungsmerkmal zur jeweiligen Befugnis und/oder Rolle eine zuordenbare Farbe eines Kleidungsstücks vorgesehen ist;
- Verknüpfen der Aufenthaltsdaten mit zumindest einem Datensatz aus Wetterdaten, Produktionsdaten;
- Auswerten der Aufenthaltsdaten hinsichtlich zumindest einer der folgenden Auffälligkeiten:
a) Gehäufte Aufenthaltsdauer von Personen (P1, P2, P3) einer bestimmten Personengruppe an zumindest einer bestimmten Messstelle (MS1, MS2, MS3); und/oder
b) Gehäufte Anzahl an Zeitpunkten von Personen (P1, P2, P3) einer bestimmten Personengruppe an zumindest einer bestimmten Messstelle (MS1, MS2, MS3), sowie Ermitteln einer bestimmten Messstelle der Anlage als wartungsintensiver und/oder Häufung des Wartungsbedarfs einer Komponente der Anlage und Verwendung der Verknüpfung; und
- Ausgeben des Ergebnisses an einen Bediener.

2. Verfahren nach Anspruch 1, wobei die Aufenthaltsdaten in einer Datenbank (DB) gespeichert werden.

3. Verfahren nach zumindest einem der vorherigen Ansprüche, wobei die Aufenthaltsdaten im Zuge des Auswertens in einem Diagramms, insbesondere einer Heatmap, visualisiert werden, in welchem die Anzahl der Zeitpunkte des Aufhaltens und/oder die Aufenthaltsdauer der Personen (P1, P2, P3) an einer jeweiligen Messstelle (MS1, MS2, MS3) kumuliert dargestellt wird.

4. Verfahren nach zumindest einem der vorherigen Ansprüche, wobei eine Vorhersage bezüglich einer zu erwartenden kumulierten Aufenthaltsdauer an zumindest einer Messstelle (MS1, MS2, MS3) berechnet wird.

5. Verfahren nach zumindest einem der vorherigen Ansprüche, wobei die Aufenthaltsdaten vor dem Auswerten oder nach dem Auswerten hinsichtlich zumindest einem der folgenden Merkmale gefiltert werden:
- Filtern hinsichtlich zumindest eines Erkennungsmerkmals (EM);
- Filtern hinsichtlich zumindest eines definierten Zeitraums; und/oder
- Filtern hinsichtlich zumindest einer Messstelle (MS1, MS2, MS3).

6. Verfahren nach Anspruch 1, wobei die Aufenthaltsdaten hinsichtlich zumindest einer der folgenden Auffälligkeiten ausgewertet werden:
- Zumindest einem Temperaturbereich, bzw. einer bestimmten Temperatur;
- Zumindest einem Herstellungsdatum, bzw. einem Herstellungszeitraum von Komponenten (FG, FG') der Messstellen (MS1, MS2, MS3); und/oder
- Hinsichtlich der Wartungskosten der Messstellen (MS1, MS2, MS3).

7. Verfahren nach zumindest einem der vorherigen Ansprüche, wobei die Bewegungen anhand zumindest einer der folgenden Methoden erfasst werden:
- Erfassung von GPS-Daten, wobei die Personen (P1, P2, P3) mit jeweils zumindest einem GPS-Modul ausgestattet sind; und/oder
- Erfassen von Bewegungen mittels zumindest einen in der Anlage (A) angeordneten Infrarot-Bewegungsmelders.

8. Verfahren nach zumindest einem der vorherigen Ansprüche, wobei die Aufenthaltsdaten zusätzlich Trajektorien (TJ1, TJ2, TJ3) der einzelnen Personen (P1, P2, P3) umfassen.

## Claims

1. Method for monitoring an installation (A) of process automation, wherein a plurality of measuring points (MS1, MS2, MS3) is provided in the installation (A), wherein a measuring point consists of one or more components, comprising:
- Detection of movements of persons (P1, P2, P3) located in the system (A) by means of an evaluation of video images, which are recorded by means of at least one video camera (VK) arranged in the system (A);
- Calculation of stay data, including times of stay and/or the respective duration of stay, of the respective persons (P1, P2, P3) at the individual measuring points (MS1, MS2, MS3) on the basis of the recorded movements;
- Grouping of the persons (P1, P2, P3) on the basis of identification features (EM), the persons (P1, P2, P3) being grouped on the basis of the authority and/or the role, the authority and/or the role being defined in an identification feature (EM) which is attached to the respective person (P1, P2, P3), an assignable color of an item of clothing being provided as an identification feature for the respective authority and/or role;
- Linking the stay data with at least one data record from weather data, production data;
- Evaluation of the stay data with regard to at least one of the following anomalies:
a) Accumulated duration of stay of persons (P1, P2, P3) of a specific group of persons at at least one specific measuring point (MS1, MS2, MS3); and/or
b) Accumulated number of times of persons (P1, P2, P3) of a certain group of persons at at least one certain measuring point (MS1, MS2, MS3), as well as determination of a certain measuring point of the system as being more maintenance-intensive and/or accumulation of the maintenance requirement of a component of the system and use of the link; and
- Output of the result to an operator.

2. The method according to claim 1, wherein the stay data is stored in a database (DB).

3. Method according to at least one of the previous claims, wherein the stay data are visualized in the course of the evaluation in a diagram, in particular a heat map, in which the number of times the persons (P1, P2, P3) have been present and/or the duration of their stay at a respective measuring point (MS1, MS2, MS3) is displayed cumulatively.

4. Method according to at least one of the previous claims, wherein a prediction is calculated with respect to an expected cumulative duration of stay at at least one measuring point (MS1, MS2, MS3).

5. The method according to at least one of the preceding claims, wherein the stay data is filtered before the evaluation or after the evaluation with respect to at least one of the following features:
- Filtering with regard to at least one identification feature (EM);
- Filtering with regard to at least one defined time period; and/or
- Filtering with regard to at least one measuring point (MS1, MS2, MS3).

6. The method according to claim 1, wherein the stay data is evaluated with respect to at least one of the following abnormalities:
- At least a temperature range or a certain temperature;
- At least one production date or production period of components (FG, FG') of the measuring points (MS1, MS2, MS3); and/or
- With regard to the maintenance costs of the measuring points (MS1, MS2, MS3).

7. The method according to at least one of the preceding claims, wherein the movements are detected by at least one of the following methods:
- acquisition of GPS data, wherein the persons (P1, P2, P3) are each equipped with at least one GPS module; and/or
- Detection of movements by means of at least one infrared movement detector arranged in the system (A).

8. Method according to at least one of the previous claims, wherein the stay data additionally comprise trajectories (TJ1, TJ2, TJ3) of the individual persons (P1, P2, P3).

## Revendications

1. Procédé de surveillance d'une installation (A) d'automatisation de processus, une pluralité de points de mesure (MS1, MS2, MS3) étant prévue dans l'installation (A), un point de mesure étant constitué d'un ou plusieurs composants, comprenant :
- Détection de mouvements de personnes (P1, P2, P3) se trouvant dans l'installation (A) à l'aide d'une évaluation d'images vidéo, qui sont enregistrées au moyen d'au moins une caméra vidéo (VK) disposée dans l'installation (A) ;
- calculer des données de séjour, comprenant des moments de séjour et/ou la durée respective du séjour, des personnes respectives (P1, P2, P3) aux points de mesure individuels (MS1, MS2, MS3) sur la base des mouvements détectés ;
- classement des personnes (P1, P2, P3) à l'aide de caractéristiques de reconnaissance (EM), les personnes (P1, P2, P3) étant classées à l'aide de l'autorisation et/ou du rôle, l'autorisation et/ou le rôle étant définis dans une caractéristique de reconnaissance (EM) qui est appliquée à la personne respective (P1, P2, P3), une couleur attribuable d'un vêtement étant prévue comme caractéristique de reconnaissance pour l'autorisation et/ou le rôle respectif ;
- Relier les données de séjour à au moins un ensemble de données provenant de données météorologiques, de données de production ;
- évaluer les données de séjour en ce qui concerne au moins l'une des anomalies suivantes :
a) durée de séjour cumulée de personnes (P1, P2, P3) d'un groupe de personnes déterminé à au moins un point de mesure déterminé (MS1, MS2, MS3) ; et/ou
b) nombre cumulé d'instants de personnes (P1, P2, P3) d'un groupe de personnes déterminé à au moins un point de mesure déterminé (MS1, MS2, MS3), ainsi que détermination d'un point de mesure déterminé de l'installation comme nécessitant une maintenance plus intensive et/ou accumulation des besoins de maintenance d'un composant de l'installation et utilisation de l'association ; et
- Sortie du résultat à un opérateur.

2. Procédé selon la revendication 1, dans lequel les données de séjour sont stockées dans une base de données (DB).

3. Procédé selon au moins l'une des revendications précédentes, dans lequel les données de séjour sont visualisées au cours de l'évaluation dans un diagramme, notamment une carte de chaleur, dans lequel le nombre d'instants de présence et/ou la durée de séjour des personnes (P1, P2, P3) à un point de mesure respectif (MS1, MS2, MS3) est représenté de manière cumulée.

4. Procédé selon au moins l'une des revendications précédentes, dans lequel une prédiction concernant une durée de séjour cumulée attendue à au moins un point de mesure (MS1, MS2, MS3) est calculée.

5. Procédé selon au moins l'une des revendications précédentes, dans lequel les données de séjour sont filtrées avant l'évaluation ou après l'évaluation en ce qui concerne au moins l'une des caractéristiques suivantes :
- Filtrer en ce qui concerne au moins une caractéristique de reconnaissance (EM) ;
- Filtrer par rapport à au moins une période définie ; et/ou
- Filtres concernant au moins un point de mesure (MS1, MS2, MS3).

6. Procédé selon la revendication 1, dans lequel les données de séjour sont évaluées en ce qui concerne au moins l'une des anomalies suivantes :
- Au moins une plage de température, ou une température déterminée ;
- au moins une date de fabrication, respectivement une période de fabrication de composants (FG, FG') des points de mesure (MS1, MS2, MS3) ; et/ou
- En ce qui concerne les coûts de maintenance des points de mesure (MS1, MS2, MS3).

7. Procédé selon au moins l'une des revendications précédentes, dans lequel les mouvements sont détectés à l'aide d'au moins l'une des méthodes suivantes :
- l'acquisition de données GPS, les personnes (P1, P2, P3) étant équipées chacune d'au moins un module GPS ; et/ou
- Détection de mouvements au moyen d'au moins un détecteur de mouvement infrarouge disposé dans l'installation (A).

8. Procédé selon au moins l'une des revendications précédentes, dans lequel les données de séjour comprennent en outre des trajectoires (TJ1, TJ2, TJ3) des différentes personnes (P1, P2, P3).
